# EUROPÄISCHE PATENTSCHRIFT

(11) **EP 3 585 946 B1**
(45) Veröffentlichungstag und Bekanntmachung des Hinweises auf die Patenterteilung: **02.11.2022**
(21) Anmeldenummer: 17707819.3
(22) Anmeldetag: 27.02.2017
(51) Int. Cl.: E01H 1/08, A47L 9/20, B01D 46/00

(54) **BODENREINIGUNGSMASCHINE**
FLOOR CLEANING MACHINE
MACHINE DE NETTOYAGE DE SOLS

(43) Veröffentlichungstag der Anmeldung: 01.01.2020
(73) Patentinhaber: Alfred Kärcher SE & Co. KG, 71364 Winnenden (DE)
(72) Erfinder: BAUER, Ulrich, 72793 Pfullingen (DE)
(74) Vertreter: Hoeger, Stellrecht & Partner Patentanwälte mbB
(86) Internationale Anmeldenummer: PCT/EP2017/054453
(87) Internationale Veröffentlichungsnummer: WO 2018/153490

(56) Entgegenhaltungen:
- DE-A1- 3 734 355
- DE-A1- 4 235 745
- DE-A1-102008 022 291
- JP-A- S59 189 819
- JP-Y1- S4 839 585

## Beschreibung

Die Erfindung betrifft eine Bodenreinigungsmaschine, umfassend eine Saugeinrichtung, eine Filtereinrichtung, welche der Saugeinrichtung zugeordnet ist, und eine Abreinigungseinrichtung für die Filtereinrichtung, wobei die Abreinigungseinrichtung einen Schwenkhebel umfasst, welcher so angeordnet ist, dass er für einen Bediener der Bodenreinigungsmaschine, welcher für einen ordnungsgemäßen Betrieb der Bodenreinigungsmaschine positioniert ist, bedienbar ist, und wobei die Abreinigungseinrichtung einen beweglichen Abstreifer für die Filtereinrichtung umfasst, wobei eine Schwenkbewegung des Schwenkhebels eine Abrein igungsbewegung des Abstreifers an der Filtereinrichtung bewirkt.

Aus der DE 30 41 005 A1 ist eine Füllstandsanzeige für Staubsauger mit einer auf- und ab-beweglichen Membran und einem drehbaren Anzeigeteller, der durch die Bewegung der Membran bewegt wird, bekannt. Zwischen der Membran und dem Anzeigeteller ist ein Winkelgetriebe angeordnet.

Aus der DE 36 29 559 A1 ist eine Entstaubungsvorrichtung für Textilmaschinen bekannt.

Die JP S48 39585 Y1 offenbart einen Staubsauger mit einer Abreinigungseinrichtung.

Die DE 37 34 355 A1 offenbart einen Staubsauger mit einer von außen bedienbaren Abreinigungsvorrichtung für einen Faltenfilter, wobei quer zu Kanten von Falten des Faltenfilters ein verschiebbarer Abstreifer vorgesehen ist, der bei seiner Verschiebung nacheinander an den Kanten der Falten zur Anlage gelangt.

Der Erfindung liegt die Aufgabe zugrunde, eine Bodenreinigungsmaschine der eingangs genannten Art bereitzustellen, welche auf einfache Weise bedienbar ist und durch welche bei einfacher konstruktiver Ausbildung auf effektive Weise eine Filterabreinigung ermöglicht ist.

Diese Aufgabe wird bei der eingangs genannten Bodenreinigungsmaschine erfindungsgemäß dadurch gelöst, dass die Abreinigungseinrichtung ein Winkelgetriebe umfasst, an welches der Schwenkhebel gekoppelt ist, und dass der bewegliche Abstreifer an das Winkelgetriebe gekoppelt ist.

Die Abreinigungseinrichtung lässt sich über den Schwenkhebel, das Winkelgetriebe und den beweglichen Abstreifer auf konstruktiv einfache Weise ausbilden.

Insbesondere lässt sich die Abreinigungseinrichtung so ausbilden, dass sie schmierungsfrei betreibbar ist. Dadurch können wiederum wesentliche Teile der Abreinigungseinrichtung in einem Schmutzraum angeordnet werden, sodass eine platzsparende Anordnung an der Bodenreinigungsmaschine ermöglicht ist. Es ergibt sich ein geringer Wartungsaufwand für die Abreinigungseinrichtung. Diese lässt sich auf einfache Weise "schmutztolerant" ausbilden und ist unsensibel gegenüber Schmutzablagerungen an ihr.

Durch die Zugriffsmöglichkeit eines Bedieners der Bodenreinigungsmaschine auf den Schwenkhebel der Abreinigungseinrichtung ergibt sich für einen Bediener der Bodenreinigungsmaschine ein minimaler Aufwand für die Abreinigung. Er kann in seiner Position, die er für den normalen Betrieb der Bodenreinigungsmaschine hat, den Schwenkhebel fassen und insbesondere auf mechanischem Weg die Abreinigung durchführen. Dadurch ergibt sich eine effektive Betriebsweise der Bodenreinigungsmaschine.

Ganz besonders vorteilhaft ist es, wenn das Winkelgetriebe in einem Schmutzraum angeordnet ist, welcher an eine Schmutzseite der Filtereinrichtung grenzt. Dadurch ergibt sich ein einfacher konstruktiver Aufbau der Bodenreinigungsmaschine. Das Winkelgetriebe und damit die Abreinigungseinrichtung lässt sich platzsparend anordnen.

Es ist günstig, wenn der Abstreifer in dem Schmutzraum angeordnet ist. Er kann dann auf effektive Weise Schmutzpartikel an der Filtereinrichtung abstreifen, welche dann im Schmutzraum verbleiben.

Ganz besonders vorteilhaft ist es, wenn das Winkelgetriebe getriebegehäusefrei in den Schmutzraum angeordnet ist. Dadurch ergibt sich ein einfacher konstruktiver Aufbau.

Günstig ist es, wenn ein Filtergehäuse vorgesehen ist, in welchem die Filtereinrichtung angeordnet ist, wobei das Filtergehäuse einen Reinraum bildet, welcher an eine Reinseite der Filtereinrichtung grenzt, und an welchen eine Gebläseeinrichtung der Saugeinrichtung fluidwirksam angeschlossen ist, und wobei das Filtergehäuse einen Schmutzraum bildet, welcher an eine Schmutzseite der Filtereinrichtung angrenzt und welcher in fluidwirksamer Verbindung mit einer Saugmündung der Saugeinrichtung steht. Es lässt sich dadurch auf einfache Weise ein definierter Saugstrom erzeugen, wobei verhindert wird, dass Schmutzpartikel zu der Gebläseeinrichtung gelangen können. Schmutzpartikel verbleiben in dem Schmutzraum und können dort auf einfache Weise gesammelt werden.

Bei einer konstruktiv einfachen Ausführungsform ist der Schwenkhebel an einer Wandung des Filtergehäuses drehbar gelagert. Die Wandung des Filtergehäuses, welche dieses fluiddicht abschließt, kann dann auch zur Positionierung von Elementen der Abreinigungseinrichtung verwendet werden.

Aus dem gleichen Grund ist es günstig, wenn mindestens ein Teil des Winkelgetriebes an einer Wandung des Filtergehäuses angeordnet ist und/oder fixiert und/oder montiert und/oder mit diesem verbunden ist. Dadurch ergibt sich ein konstruktiv einfacher Aufbau.

Bei einem Ausführungsbeispiel ist der Schwenkhebel drehfest mit einer Welle verbunden, welche drehbar an einer Wandung gelagert ist. Dadurch lässt sich auf einfache Weise ein drehbarer Schwenkhebel realisieren und der Schwenkhebel lässt sich auf einfache Weise mit der Wandung verbinden.

Bei einem Ausführungsbeispiel ist eine erste Zahnkranzeinrichtung des Winkelgetriebes drehfest mit der Welle verbunden. Es lässt sich dann auf einfache Weise eine Winkelumsetzung erreichen, um den Abstreifer zu bewegen.

Es ist dann insbesondere konstruktiv günstig, wenn die Wandung zwischen dem Schwenkhebel und der ersten Zahnkranzeinrichtung angeordnet ist. Es ergibt sich dadurch ein mechanisch einfacher Aufbau mit optimierter Bedienbarkeit der Abreinigungseinrichtung.

Bei einer Ausführungsform weist ein Zahn der ersten Zahnkranzeinrichtung eine Abstandsrichtung zwischen einem Fußbereich und einem Kopfbereich auf, welche mindestens näherungsweise parallel zu einer Drehachse der Welle ist. Sie kann exakt parallel zu der Drehachse der Welle sein oder in einem kleinen spitzen Winkel von höchstens 25° zu dieser orientiert sein. Es lässt sich dadurch auf einfache Weise ein Winkelgetriebe mit einer Winkelumsetzung realisieren.

Günstig ist es, wenn die erste Zahnkranzeinrichtung als Schwinge ausgebildet ist und insbesondere wenn Zähne der ersten Zahnkranzeinrichtung beabstandet zu einer Drehachse der Welle und insbesondere beabstandet zu der Welle sind. Es lässt sich beispielsweise dadurch auf einfache Weise eine Schwenkwinkelbegrenzung mittels Anschlägen durchführen. Ferner lässt sich eine optimale Positionierung in einem Filtergehäuse erreichen.

Günstig ist es, wenn der ersten Zahnkranzeinrichtung ein erster Anschlag und/oder ein zweiter Anschlag zur Begrenzung einer Schwenkbeweglichkeit zugeordnet ist. Diese Anschläge lassen sich insbesondere innerhalb des Filtergehäuses anordnen. Durch sie ist dann auch eine Schwenkbeweglichkeit des Schwenkhebels begrenzt.

Insbesondere sind der erste Anschlag und/oder der zweite Anschlag an der Wandung (an welcher insbesondere auch der Schwenkhebel angeordnet ist) angeordnet. Es ergibt sich dadurch ein einfacher konstruktiver Aufbau.

Bei einer Ausführungsform weist ein Zahnkranz der ersten Zahnkranzeinrichtung mindestens ein erstes Segment mit Zähnen und ein zweites Segment mit Zähnen auf, wobei das erste Segment und das zweite Segment jeweils mit einem Steg verbunden und quer zu dem Steg orientiert sind, und wobei zwischen dem ersten Segment und dem zweiten Segment ein Spalt liegt. Das erste Segment und das zweite Segment sitzen dabei an dem gleichen Steg. Über den Spalt sind das erste Segment und das zweite Segment getrennt. Der Spalt kann dabei ein Luftspalt sein, oder das erste Segment und das zweite Segment können an dem Spalt aneinander stoßen. Es lässt sich dadurch die erste Zahnkranzeinrichtung auf einfache Weise durch einen Schneidvorgang wie beispielsweise Stanzvorgang oder Laserschneidvorgang herstellen. Es lässt sich eine Krümmung an einer Kopflinie der Zähne der ersten Zahnkranzeinrichtung einstellen, wobei das erste Segment und das zweite Segment durch Abbiegen an dem Stegelement bzw. durch Abfalzen hergestellt werden können.

Insbesondere sind das erste Segment und das zweite Segment dann einstückig mit dem Steg verbunden und durch Biegen oder Falten hergestellt. Es ergibt sich dadurch eine einfache Herstellbarkeit.

Aus den genannten Gründen ist es günstig, wenn die erste Zahnkranzeinrichtung mindestens teilweise durch einen Schneidvorgang hergestellt ist. Der Schneidvorgang ist beispielsweise ein Stanzvorgang oder ein Laserschneidvorgang.

Es ist ferner günstig, wenn das Winkelgetriebe eine zweite Zahnkranzeinrichtung umfasst, welche an die erste Zahnkranzeinrichtung drehmomentenwirksam gekoppelt ist. Dadurch lässt sich auf einfache Weise über das Winkelgetriebe eine Schwenkbewegung des Schwenkhebels in eine Bewegung des Abstreifers umsetzen. Insbesondere erfolgt eine Bewegung des Abstreifers zur Filtereinrichtung manuell angetrieben durch den Bediener über die Schwenkung des Schwenkhebels.

Es ist dann günstig, wenn die zweite Zahnkranzeinrichtung drehbar um eine Drehachse ist, welche quer und insbesondere senkrecht zu einer Drehachse der ersten Zahnkranzeinrichtung orientiert ist. Es wird dadurch bei dem Winkelgetriebe eine entsprechende Winkelumsetzung erreicht. Dies ermöglicht eine platzsparende Anordnung mit effektiver Filterabreinigung der Filtereinrichtung.

Ganz besonders vorteilhaft ist es, wenn die erste Zahnkranzeinrichtung und die zweite Zahnkranzeinrichtung so aneinander mit Spiel angepasst ausgebildet sind, dass das Winkelgetriebe schmierungsfrei bzw. trocken betreibbar ist. Dadurch ergibt sich ein konstruktiv einfacher Aufbau der Abreinigungseinrichtung mit effektiver Betriebsweise. Es können sich bis zu einem gewissen Maße auch Staubpartikel an dem Winkelgetriebe ablagern, ohne dass dessen Betrieb darunter leidet.

Günstigerweise ist die zweite Zahnkranzeinrichtung an einen Abstreifer gekoppelt. Es lässt sich dann eine Drehbewegung an der zweiten Zahnkranzeinrichtung (welche über die erste Zahnkranzeinrichtung von dem Schwenkhebel übertragen ist) in eine Bewegung und insbesondere Verschiebungsbewegung des Abstreifers umsetzen.

Günstigerweise umfasst die Filtereinrichtung einen Flachfaltenfilter und der Abstreifer eine Mehrzahl von Wirkelementen auf Falten der Filtereinrichtung. Es lässt sich so großflächig auf die Filtereinrichtung einwirken, um eine effektive Abreinigung zu ermöglichen.

Bei einer konstruktiv günstigen Ausführungsform ist der Abstreifer verschieblich geführt. Dadurch ergibt sich ein mechanisch einfacher Aufbau der Abreinigungseinrichtung. Eine Drehbewegung an dem Winkelgetriebe lässt sich dann auf einfache Weise in eine Verschiebung des Abstreifers umsetzen.

Bei einem Ausführungsbeispiel weist der Abstreifer mindestens eine Stange auf, welche mit Ausnehmungen versehen ist, an welchen Zähnen einer (zweiten) Zahnkranzeinrichtung des Winkelgetriebes eingreifbar sind, wobei in einer bestimmten Stellung des Abstreifers ein Zahn der Zahnkranzeinrichtung in mindestens eine Ausnehmung der mindestens einen Stange eingreift. Es lässt sich dadurch auf einfache Weise eine Drehung der Zahnkranzeinrichtung in eine Bewegung und insbesondere Verschiebungsbewegung der Stange und damit des Abstreifers umsetzen.

Ganz besonders vorteilhaft ist es, wenn die mindestens eine Stange und die eingreifende Zahnkranzeinrichtung so aneinander angepasst mit Spiel ausgebildet sind, dass ein schmierungsfreier Betrieb ermöglicht ist. Dadurch ergibt sich eine einfache wartungsarme Betriebsweise bei konstruktiv einfachem Aufbau der Abreinigungseinrichtung.

Bei einer Ausführungsform beträgt bei Eingriff eines Zahns der Zahnkranzeinrichtung an einer Ausnehmung des mindestens einen Stabs an mindestens einer Stelle ein Abstand zwischen einem Zahn und einer Wandung der Ausnehmung mindestens 0,5 mm. Dadurch wird auf einfache Weise ein schmierungsfreier Betrieb ermöglicht. Es werden bis zu einem gewissen Maß Ablagerungen von Staubpartikeln toleriert.

Bei einer konstruktiv einfachen Ausführungsform ist der Abstreifer an einem Halter verschieblich gelagert, welcher an einer Aufnahmewandung für die Filtereinrichtung sitzt. Die Aufnahmewandung ist insbesondere eine Art von Deckenwandung.

Es ergibt sich ein konstruktiv einfacher Aufbau, wenn eine (zweite) Zahnkranzeinrichtung des Winkelgetriebes an einem Halter drehbar gelagert ist, welcher an einer Aufnahmewandung für die Filtereinrichtung sitzt, und insbesondere wenn an dem Halter auch der Abstreifer beweglich gelagert ist. Dadurch ergibt sich eine optimierte Anordnung der Abreinigungseinrichtung an der Bodenreinigungsmaschine.

Bei einer Ausführungsform ist die Bodenreinigungsmaschine als Kehrmaschine ausgebildet, welche eine oder mehrere Kehrwalzen bzw. Kehrbesen umfasst.

Beispielsweise ist die Bodenreinigungsmaschine als Aufsitzmaschine ausgebildet, wobei der Schwenkhebel so angeordnet ist, dass er von einem sitzenden Benutzer bedienbar ist.

Es ist auch möglich, dass die Bodenreinigungsmaschine als Nachläufermaschine oder Aufstehmaschine ausgebildet ist, wobei der Schwenkhebel so angeordnet ist, dass er von einem Benutzer der Bodenreinigungsmaschine in seiner Stehstellung (entweder der Bodenreinigungsmaschine nachlaufend oder auf dieser stehend) an der Bodenreinigungsmaschine bedienbar ist. Es ergibt sich dadurch eine optimierte Betriebsweise.

Die nachfolgende Beschreibung bevorzugter Ausführungsformen dient im Zusammenhang mit den Zeichnungen der näheren Erläuterung der Erfindung. Es zeigen:
- Figur 1: eine Seitenansicht eines Ausführungsbeispiels einer erfindungsgemäßen Bodenreinigungsmaschine;
- Figur 2: eine perspektivische Teildarstellung (ohne Verkleidung und Fahrersitz) der Bodenreinigungsmaschine gemäß Figur 1;
- Figur 3: eine Draufsicht auf die Bodenreinigungsmaschine gemäß Figur 1;
- Figur 4: eine Hinteransicht der Bodenreinigungsmaschine gemäß Figur 1;
- Figur 5: eine perspektivische Teilansicht des Bereichs A gemäß Figur 2;
- Figur 6: eine perspektivische Darstellung einer Abreinigungseinrichtung für eine Filtereinrichtung mit einem Schwenkhebel, wobei der Schwenkhebel in Figur 5 gezeigt ist;
- Figur 7: eine Schnittansicht der Abreinigungseinrichtung gemäß Figur 6 mit einer Blickrichtung B gemäß Figur 6;
- Figur 8: eine Ansicht von unten in der Richtung C gemäß Figur 6 auf die Abreinigungseinrichtung;
- Figur 9: eine schematische Darstellung eines Eingriffs eines Zahns eines Winkelgetriebes in eine Ausnehmung eines Abstreifers; und
- Figur 10: eine schematische Darstellung eines weiteren Ausführungsbeispiels einer erfindungsgemäßen Bodenreinigungsmaschine.

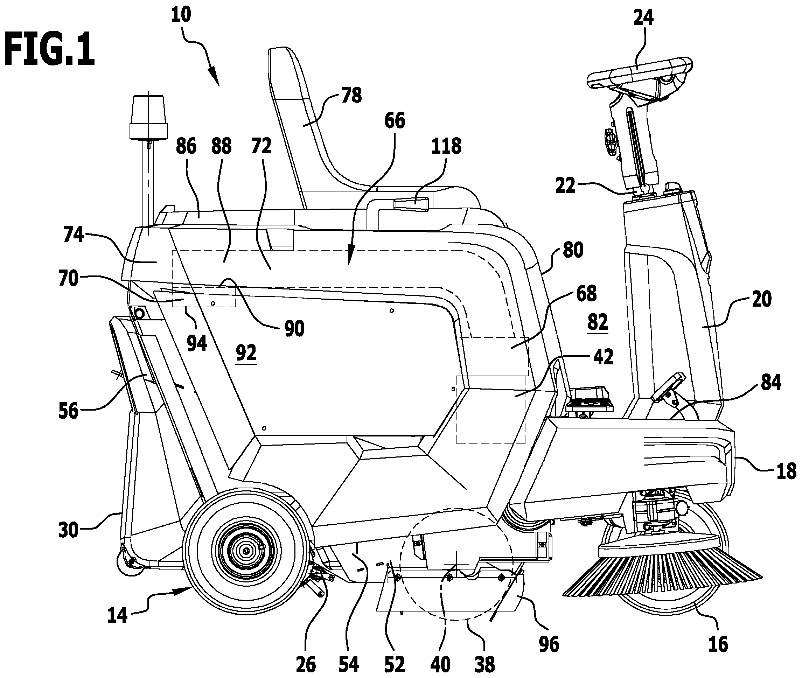

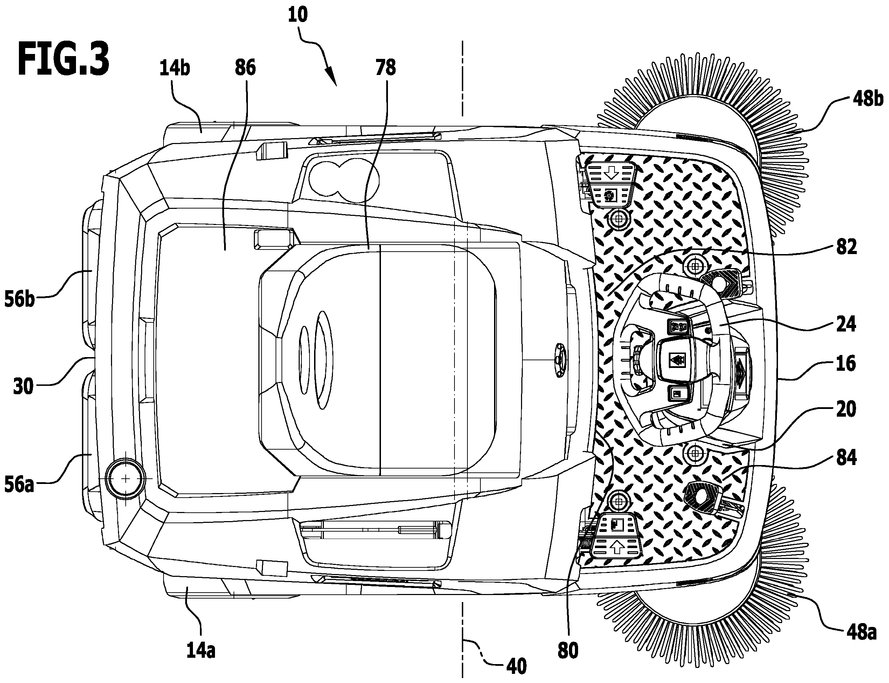

Ein erstes Ausführungsbeispiel einer erfindungsgemäßen Bodenreinigungsmaschine, welches in den Figuren 1 bis 4 gezeigt und mit 10 bezeichnet ist, ist eine Kehrmaschine, welche als Aufsitz-Bodenreinigungsmaschine (Aufsitz-Kehrmaschine) ausgebildet ist.

Diese Bodenreinigungsmaschine 10 umfasst ein Fahrgestell 12, an welchem eine Hinterradeinrichtung 14 mit einem rechten Hinterrad 14a und einem linken Hinterrad 14b (bezogen auf eine Vorwärtsfahrtrichtung) angeordnet sind.

Ferner ist an dem Fahrgestell 12 ein lenkbares Vorderrad 16 angeordnet.

An dem Fahrgestell 12 sitzt im Bereich eines vorderen Endes 18 ein Säulenelement 20. In diesem Säulenelement 20 ist eine Lenkstangeneinrichtung 22 positioniert, welche mit dem Vorderrad 16 verbunden ist.

An der Lenkstangeneinrichtung 22 ist außerhalb des Säulenelements 20 eine Lenkradeinrichtung 24 angeordnet.

Die Bodenreinigungsmaschine 10 ist selbstfahrend. Der Hinterradeinrichtung 14 ist ein an dem Fahrgestell 12 angeordneter Antrieb 26 zugeordnet. Dieser Antrieb 26 ist bzw. umfasst bei einer Ausführungsform einen Elektromotor.

Dieser Elektromotor wird direkt über einen Generator 36 (siehe unten) und/oder über eine wiederaufladbare Batterieeinrichtung 28 mit elektrischer Energie versorgt. Die Batterieeinrichtung 28 ist in einem mittleren Bereich der Bodenreinigungsmaschine 10 zwischen dem vorderen Ende 18 und einem hinteren Ende 30 an einem entsprechenden Batteriehalter 32 angeordnet. Der Batteriehalter 32 ist direkt oder indirekt mit dem Fahrgestell 12 verbunden.

Bei einer Ausführungsform weist die Bodenreinigungsmaschine 10 einen Verbrennungsmotor 34 auf. Dieser Verbrennungsmotor 34 treibt einen Generator 36 an, welcher nutzbaren elektrischen Strom bereitstellt. Es ist dabei grundsätzlich möglich, dass dieser von dem Generator 36 bereitgestellte elektrische Strom durch Elektromotoren der Bodenreinigungsmaschine 10 (wie dem Elektromotor des Antriebs 26) direkt genutzt wird und/oder die Batterieeinrichtung 28 geladen wird und elektrische Energie aus der Batterieeinrichtung 28 zur Versorgung der entsprechenden Elektromotoren verwendet wird. Wie untenstehend noch näher erläutert wird, ist mindestens ein weiterer Elektromotor für den Antrieb einer oder mehrerer Kehrwalzen bzw. einer Gebläseeinrichtung vorgesehen.

Es ist grundsätzlich auch ein Hybridbetrieb der Bodenreinigungsmaschine 10 möglich. In einem ersten Betriebsmodus wird der Verbrennungsmotor 34 betrieben, welcher dann den Generator 36 zur Bereitstellung von elektrischem Strom antreibt. In einem zweiten Betriebsmodus wird der Verbrennungsmotor 34 nicht betrieben und die zum Betrieb der Bodenreinigungsmaschine 10 notwendige elektrische Energie wird allein aus der Batterieeinrichtung 28 entnommen, welche dazu entsprechend ausgelegt ist.

An dem Fahrgestell 12 ist eine Kehrwalze 38 angeordnet (Figur 1), welche eine Hauptkehrwalze ist. Diese Kehrwalze 38 ist um eine Drehachse 40 drehbar gelagert, welche parallel zu einer Radachse der Hinterradeinrichtung 14 ist. Bei auf einer ebenen Fläche aufgestellter Bodenreinigungsmaschine 10, bei der sich das Vorderrad 16 und die Hinterradeinrichtung 14 an der entsprechenden Fläche abstützen, ist die Drehachse 40 parallel zu der ebenen Fläche.

Die Kehrwalze 38 ist zwischen der Hinterradeinrichtung 14 und dem Vorderrad 16 positioniert. Sie ist mindestens näherungsweise unterhalb des Batteriehalters 32 positioniert.

Sie ist an einer Unterseite des Fahrgestells 12 positioniert bzw. derart positioniert, dass sie nach unten hinausragt, sodass auf eine zu reinigende Fläche eingewirkt werden kann.

An dem Fahrgestell 12 ist direkt oder indirekt mit diesem verbunden ein weiterer Antriebsmotor 42 angeordnet. Dieser Antriebsmotor 42 ist dabei beispielsweise vor dem Batteriehalter 32 positioniert. Der Antriebsmotor 42 ist ein Elektromotor, welcher direkt durch den Generator 36 und/oder durch die Batterieeinrichtung 28 mit elektrischem Strom versorgt wird.

An eine Welle 46 des Antriebsmotors 42 ist eine Drehmomentenübertragungseinrichtung 44 angekoppelt, welche ebenfalls an die Kehrwalze 38 zu deren Rotationsantrieb gekoppelt ist. Die Drehmomentenübertragungseinrichtung 44 umfasst beispielsweise ein oder mehrere Riemenantriebe. Es ist bei einem Ausführungsbeispiel vorgesehen, dass die Drehmomentenübertragungseinrichtung 44 eine Untersetzung (beispielsweise realisiert über ein entsprechendes Riemenrad) aufweist, sodass die Drehgeschwindigkeit der Drehung der Kehrwalze 38 um die Drehachse 40 niedriger ist als die Drehgeschwindigkeit der Welle 46 des Antriebsmotors 42.

Die Bodenreinigungsmaschine 10 weist ferner einen oder mehrere Seitenbesen 48 auf. Bei dem gezeigten Ausführungsbeispiel weist die Kehrmaschine 10 einen rechten Seitenbesen 48a und einen linken Seitenbesen 48b auf.

Ein Seitenbesen 48 ist um eine jeweilige Drehachse 50 drehbar. Die Drehachse 50 ist dabei quer zu der Drehachse 40 der (Haupt-)Kehrwalze 38 orientiert. Sie kann senkrecht zu der Drehachse 40 orientiert sein oder beispielsweise in einem kleinen spitzen Winkel von dieser Senkrechten abweichend orientiert sein.

Eine Drehung der Seitenbesen 48a, 48b um die jeweilige Drehachse 50 ist durch den Antriebsmotor 42 angetrieben. Es ist dazu eine entsprechende Drehmomentenübertragungseinrichtung vorgesehen, welche teilweise durch die Drehmomentenübertragungseinrichtung 44 gebildet sein kann, um das Drehmoment des Antriebsmotors 42 (an der Welle 46) auf die jeweiligen Seitenbesen 48a, 48b zu übertragen.

Das Vorderrad 16 ist bezogen auf eine Querrichtung an dem Fahrgestell 12 (welche senkrecht zu einer Abstandsrichtung zwischen dem vorderen Ende 18 und dem hinteren Ende 30 ist) zwischen den Seitenbesen 48a und 48b positioniert.

Bei einem Ausführungsbeispiel liegt der rechte Seitenbesen 48a fluchtend zu dem rechten Hinterrad 14a und der linke Seitenbesen 48b liegt fluchtend zu dem linken Hinterrad 14b, wobei die Seitenbesen 48 im Bereich des vorderen Endes 18 des Fahrgestells 12 positioniert sind.

An dem Fahrgestell 12 ist eine Einkopplungsmündung 52 angeordnet, über welche Schmutz und insbesondere Kehrgut einkoppelbar ist.

Die Seitenbesen 48 sorgen für eine Zuführung von Kehrgut zu der Kehrwalze 38 hin. Die Kehrwalze 38 wirft Kehrgut an der Einkopplungsmündung 52 in einen Kanal 54, welcher an dem Fahrgestell 12 positioniert ist. Der Kanal 54 führt zu einer Behältereinrichtung 56 zur Aufnahme von Schmutz.

Bei einem Ausführungsbeispiel umfasst die Behältereinrichtung 56 einen ersten Behälter 56a und einen zweiten Behälter 56b, welche nebeneinander lösbar an dem Fahrgestell 12 der Bodenreinigungsmaschine 10 im Bereich des hinteren Endes 30 positioniert sind.

Kehrgut, welches in die Behältereinrichtung 56 gefördert wird, wird auf die beiden Behälter 56a, 56b aufgeteilt. Dadurch ist ein einzelner gefüllter Behälter 56a bzw. 56b leichter, als wenn nur ein einziger Behälter vorgesehen wird.

Bei einem Ausführungsbeispiel umfasst die Bodenreinigungsmaschine 10 ein an dem Fahrgestell 12 angeordnetes Gehäuse 58. Diese Gehäuse 58 weist einen Aufnahmeraum 60 auf, welche insbesondere in Art einer Einschuböffnung ausgebildet ist. In diese sind die Behälter 56a, 56b einschiebbar, sodass sie Kehrgut, welche aus dem Kanal 54 zu ihnen gelangt, aufnehmen können.

Es ist eine Fixierungseinrichtung 62 vorgesehen, um in den Aufnahmeraum 60 positionierte Behälter 56a, 56b mit dem Fahrgestell 12 bzw. mit dem Gehäuse 58 fixieren zu können.

Bei einem Ausführungsbeispiel weisen die Behälter 56a, 56b Rollen 64 auf, um die Kehrgutentsorgung zu erleichtern, wenn die Behälter 56a, 56b von der Bodenreinigungsmaschine 10 entfernt sind.

Bei einem Kehrvorgang bewirkt die rotierende Kehrwalze 38 ein Schleudern von Schmutzteilchen in den Kanal 54 an der Einkopplungsmündung 52 und damit eine Befüllung der Behältereinrichtung 56 mit Kehrgut. Die rotierende Kehrwalze 38 erzeugt ferner eine Luftströmung, welche die Einkopplung von Kehrgut in die Behältereinrichtung 56 unterstützt.

Die Bodenreinigungsmaschine 10 weist ferner eine Saugeinrichtung 66 auf, durch welche im Bereich der Einkopplungsmündung 52 ein Saugstrom wirkt, um die Einkopplung von Kehrgut in die Behältereinrichtung 56 zu unterstützen.

Die Saugeinrichtung 66 weist eine Gebläseeinrichtung 68 auf. Die Gebläseeinrichtung 68 erzeugt einen entsprechenden Unterdruckstrom für den Saugeffekt.

Die Gebläseeinrichtung 68 ist direkt oder indirekt mit dem Fahrgestell 12 verbunden.

Bei einem Ausführungsbeispiel ist die Gebläseeinrichtung 68 zwischen dem Antriebsmotor 42 und dem Verbrennungsmotor 34 positioniert und dabei vor dem Batteriehalter 32 zu dem vorderen Ende 18 des Fahrgestells 12 hin angeordnet.

Der Antriebsmotor 42 weist für die Welle 46 einen Wellenstummel auf, welcher zu einer rechten Seite der Bodenreinigungsmaschine 10 hin ragt, um eben die Drehmomentenübertragungseinrichtung 44 für die Kehrwalze 38 (und die Drehmomentenübertragungseinrichtung für die Seitenbesen 48) antreiben zu können. Sie weist ferner einen Wellenstummel auf, welcher zu der linken Seite der Bodenreinigungsmaschine 10 hin ragt. Dieser Wellenstummel treibt ein oder mehrere Laufräder der Gebläseeinrichtung 68 an. Bei diesem Ausführungsbeispiel ist ein Antriebsmotor 42 sowohl für einen Kehrwalzenantrieb als auch für einen Antrieb der Gebläseeinrichtung 68 vorgesehen.

Zwischen der Gebläseeinrichtung 68 und der Behältereinrichtung 56 ist eine Filtereinrichtung 70 positioniert. Die Filtereinrichtung 70 verhindert, dass eingekoppelte Schmutzpartikel zu der Gebläseeinrichtung 68 gelangen können.

In dem Gehäuse 58 ist oberhalb der Öffnung 60 (bezogen auf eine Abstandsrichtung von dem Fahrgestell 12 nach oben weg) ein Saugkanal 72 bzw. sind mehrere Saugkanäle 72 gebildet, welche von der Gebläseeinrichtung 68 zu der Filtereinrichtung 70 führen.

Die Filtereinrichtung 70 ist in einem Filtergehäuse 74 angeordnet, welches Teil des Gehäuses 58 sein kann oder von diesem getrennt ist.

Das Filtergehäuse 74, in welchem die Filtereinrichtung 70 positioniert ist, ist im Bereich des hinteren Endes 30 der Bodenreinigungsmaschine 10 oberhalb der Hinterradeinrichtung 14 und oberhalb der Behältereinrichtung 56 angeordnet. In dem Filtergehäuse 74 ist ein Filterhalter 76 zum Halten der Filtereinrichtung 74 positioniert.

Der oder die Saugkanäle 72 sind in dem Gehäuse 58 angeordnet und oberhalb der Behältereinrichtung 56 zu der Gebläseeinrichtung 68 geführt.

Die Bodenreinigungsmaschine 10 weist einen Bedienersitz 78 auf. Bei einem Ausführungsbeispiel ist dieser Bedienersitz 78 oberhalb des oder der Saugkanäle 72 positioniert.

Das Gehäuse 58 weist eine Wandung 80 auf, welche beabstandet zu dem Säulenelement 20 ist und zu dem Bedienersitz 78 korrespondierend angeordnet ist.

Zwischen dem Säulenelement 20 und der Wandung 80 ist ein Freiraum 82 gebildet.

Der Freiraum 82 ist nach unten hin durch eine Bodenwandung 84 begrenzt. An Dieser Bodenwandung 84 kann ein Bediener, welcher auf dem Bedienersitz 78 sitzt, seine Füße aufstellen. Entsprechend sind an der Bodenwandung 84 Bedienelemente und insbesondere Pedale und dergleichen angeordnet.

Der Bedienersitz 78 ist beabstandet zu dem hinteren Ende 30. An dem Gehäuse 58 ist an einem entsprechenden Zwischenbereich ein öffenbarer Deckel 86 angeordnet, wobei es bei geöffnetem Deckel 86 möglich ist, auf die Filtereinrichtung 70 an dem Filterhalter 76 zuzugreifen.

In dem Filtergehäuse 74 ist ein Reinraum 88 gebildet. Dieser Reinraum 88 ist direkt fluidwirksam mit der Gebläseeinrichtung 68 verbunden. Der Reinraum 88 grenzt an eine Reinseite 90 der Filtereinrichtung 70.

Bei einem Ausführungsbeispiel ist der Reinraum 88 mindestens teilweise der Raum, welcher in dem Filtergehäuse 74 zwischen der Filtereinrichtung 70 und dem Deckel 86 liegt.

In dem Filtergehäuse 74 ist ferner ein Schmutzraum 92 gebildet, welcher in direktem Fluidkontakt mit der Einkopplungsmündung 52 und dem Kanal 54 steht. Dieser Schmutzraum 92 grenzt an eine Schmutzseite 94 der Filtereinrichtung 70.

Der Schmutzraum 92 ist mindestens teilweise ein Innenraum der Behältereinrichtung 86 und/oder steht in direktem Fluidkontakt mit diesem Innenraum.

An dem Fahrgestell 12 sind der Einkopplungsmündung 52 zugeordnet eine oder mehrere Schürzen 96 angeordnet, welche bei ordnungsgemäßem Betrieb der Bodenreinigungsmaschine 10 die zu reinigende Fläche berühren bzw. einen nur sehr kleinen Abstand zu ihr aufweisen. Es sind dabei lateral (links und rechts) jeweils eine solche Schürze 96 an der Einkopplungsmündung 52 angeordnet.

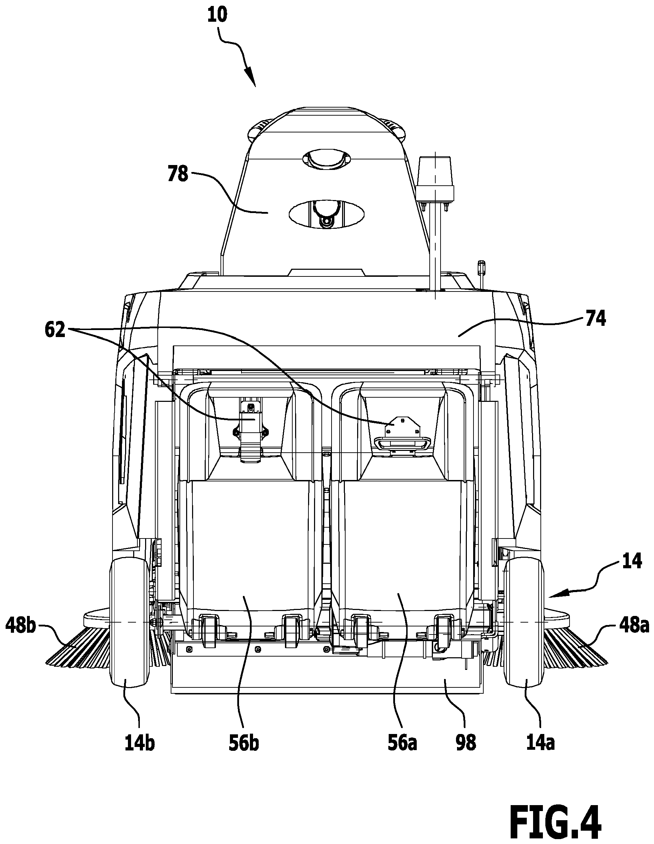

Es ist insbesondere vorgesehen, dass ein Kehrkantenelement 98 (Figur 4) der Einkopplungsmündung 52 zugeordnet an dem Fahrgestell 12 angeordnet ist. Das Kehrkantenelement 98 erstreckt sich im Wesentlichen über die gesamte Länge der Einkopplungsmündung 52 in einer Querrichtung zu der Längsrichtung zwischen dem vorderen Ende 18 und dem hinteren Ende 30. Es dient dazu, ein Durchwerfen von Kehrgut unter dem Fahrgestell 12 an der Einkopplungsmündung 52 vorbei nach hinten (zu dem hinteren Ende 30 hin) zu verhindern.

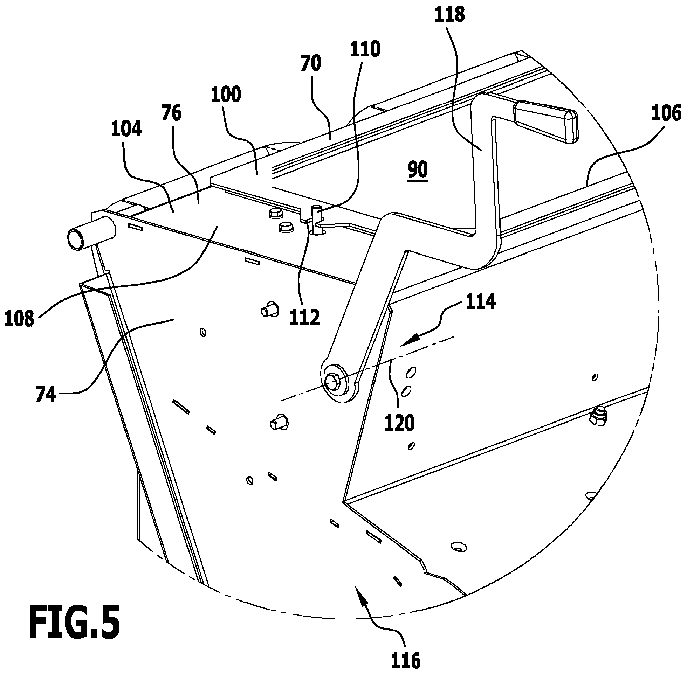

Die Filtereinrichtung 70 ist insbesondere als Flachfaltenfilter ausgebildet. Sie umfasst einen Rahmen 100 (Figuren 5 bis 8), welcher insbesondere im Querschnitt rechteckig ist. An dem Rahmen 100 sind parallel orientiert Falten 102 aus Filtermaterial gehalten. Das Filtermaterial ist luftdurchlässig und für Staubpartikel bis zu einer unteren Schwellengröße undurchlässig.

Der Rahmen 100 weist bei einer Ausführungsform eine größere Länge und Breite auf als der Bereich der Falten 102.

Der Filterhalter 76 umfasst eine (Aufnahme-)Wandung 104, welche in dem Filtergehäuse 74 positioniert ist. Diese Wandung 104 bildet eine Art von Deckelwandung. Sie bildet im Wesentlichen eine Trennwandung zwischen dem Reinraum 88 und dem Schmutzraum 92. Die Wandung 104 ist beabstandet zu dem Deckel 86 angeordnet. Sie ist im Wesentlichen parallel zu einer Unterseite des Fahrgestells 12 orientiert.

In der Wandung 104 ist eine Öffnung 106 mit im Wesentlichen rechteckförmigen Querschnitt gebildet. Die Öffnung 106 ist dabei so dimensioniert, dass die Falten 102 der Filtereinrichtung 70 durch die Öffnung 106 durchtauchbar sind, und der Rahmen 100 an einer Oberseite 108 der Wandung 104 anlegbar ist (vergleiche beispielsweise Figur 5).

Der Filterhalter 76 umfasst ferner einen oder mehrere Stifte 110 (vergleiche Figur 5), welche an der Wandung 104 angeordnet sind und über dessen Oberseite 108 hinausragen.

An dem Rahmen 100 der Filtereinrichtung 70 sind dem oder den Stiften 110 zugeordnete Ausnehmungen 112 gebildet. Ein Stift 110 ist seine zugeordnete Ausnehmung 112 eintauchbar. Es lässt sich dadurch eine zusätzliche Bewegungssicherung der Filtereinrichtung 70 an dem Filterhalter 76 erreichen.

Wie untenstehend noch näher erläutert wird, kann ein Stift 110 Teil eines Befestigungselements wie einer Schraube oder einem Bolzen für einen Teil einer Abreinigungseinrichtung für die Filtereinrichtung 70 sein.

Das Filtergehäuse 74 mit darin positionierter Behältereinrichtung 56 ist außerhalb der Öffnung 106 und der Einkopplungsmündung 52 fluiddicht ausgebildet, sodass ein definierter Strömungsweg bereitgestellt ist.

Der Filtereinrichtung 70 ist eine Abreinigungseinrichtung 114 zugeordnet, mittels welcher sich die Filtereinrichtung abreinigen lässt.

Die Abreinigungseinrichtung 114 ist bei einem Ausführungsbeispiel als mechanische Einrichtung ausgebildet, welche durch einen Benutzer, der auf dem Bedienersitz 78 sitzt, manuell bedienbar ist.

Der Schmutzraum 92 ist im Filtergehäuse 74 nach oben durch die Wandung 104 geschlossen. Die Wandung 104 ist dabei mindestens näherungsweise parallel zu dem Deckel 86. Bei geöffnetem Deckel 86 lässt sich die Filtereinrichtung 70 nach oben herausnehmen und austauschen.

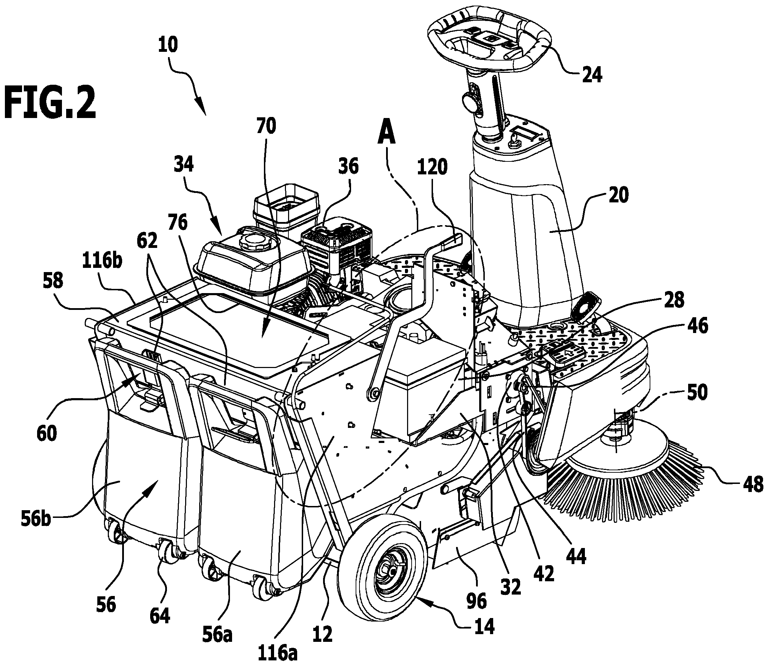

Seitlich ist das Filtergehäuse 74 durch eine (Seiten-)Wandung 116 mit gegenüberliegenden (Seiten-)Wänden 116a, 116b geschlossen (vergleiche auch Figur 2).

Die Wände 116a, 116b der Wandung 116 sind mit der Wandung 104 fluiddicht verbunden, wobei die Wände 116a, 116b quer und insbesondere senkrecht zu der Wandung 104 orientiert sind.

An der (Seiten-)Wand 116a ist ein Schwenkhebel 118 um eine Drehachse 120 drehbar gelagert. Der Schwenkhebel 118 ist dabei an einer Außenseite der Wand 116a positioniert und so ausgebildet, dass er insbesondere im Bereich eines Griffendes von einem auf dem Bedienersitz 78 sitzenden Benutzer greifbar ist und dabei schwenkbar ist.

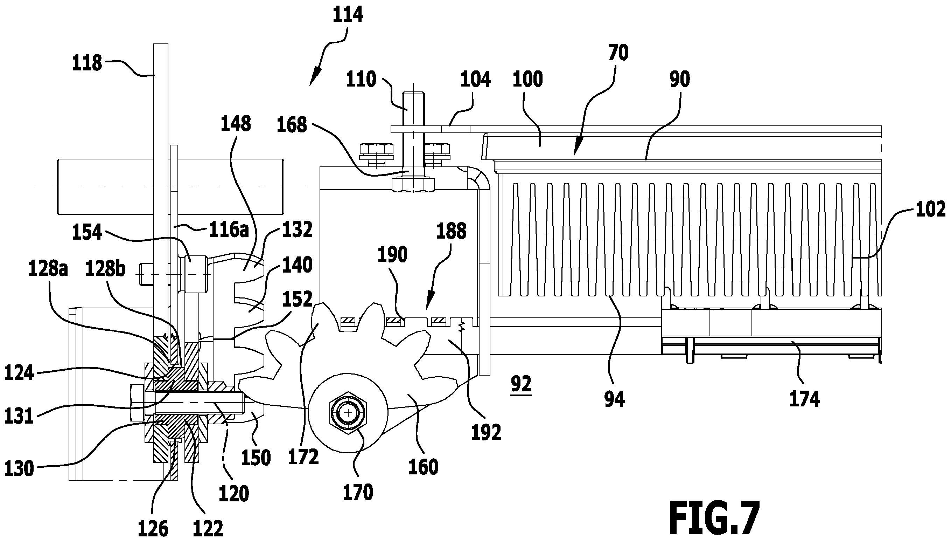

Der Schwenkhebel 118 ist über ein Drehlager 122 an der Wand 116a der Wandung 116 gelagert. Die Wand 116a umfasst dazu eine Öffnung 124, welche insbesondere zylindrisch ist. In der Öffnung 124 sitzt eine Dichtung 126 insbesondere aus einem Kunststoffmaterial. Diese Dichtung ist im Querschnitt U-förmig (vergleiche Figur 7) und umgreift mit Schenkeln 128a, 128b einen Wandbereich der Wand 116a um die Öffnung 124.

In dem verbleibenden Bereich der Öffnung 124 sitzt umgeben von der Dichtung 126 ein Halteelement 130. Das Halteelement 130 bildet eine Welle 131. Dieses Halteelement 130 ist drehfest mit dem Schwenkhebel 118 verbunden. Das Halteelement 130 ist ferner drehfest mit einer ersten Zahnkranzeinrichtung 132 verbunden. Die erste Zahnkranzeinrichtung 132 ist dabei in dem Filtergehäuse 74 in dem Schmutzraum 92 positioniert. Zwischen der ersten Zahnkranzeinrichtung 132 und dem Schwenkhebel 118 liegt die Wand 116a.

Die Dichtung 126 bildet eine Radialdichtung um das Halteelement 130 und eine Öffnung 124 in der Wand 116a. Es ist dabei grundsätzlich möglich, dass das Halteelement 130 gegen die Dichtung 126 um die Drehachse 120 drehbar ist, oder die Kombination aus Halteelement 130 und Dichtung 126 in der Öffnung 124 um die Drehachse 120 drehbar sind (sodass die Welle 131 durch diese Kombination gebildet ist). Im letzteren Falle sind die Dichtung 126 und das Halteelement 130 drehfest miteinander verbunden.

Eine Drehbewegung des Schwenkhebels 118 um die Drehachse 120 setzt sich direkt in eine Drehbewegung der ersten Zahnkranzeinrichtung 132 um.

Die erste Zahnkranzeinrichtung 132 ist als Schwinge ausgebildet. Sie umfasst einen Steg 134. Dieser Steg 134 ist drehfest mit dem Halteelement 130 im Bereich eines ersten Endes 136a des Stegs verbunden. An einem gegenüberliegenden zweiten Ende 136b des Stegs 134 sitzt ein Zahnkranz 138 der ersten Zahnkranzeinrichtung 132. Dieser Zahnkranz 138 weist eine Mehrzahl von Zähnen 140 auf.

Bei einem Ausführungsbeispiel ist der Zahnkranz 138 einstückig an dem Steg 134 gebildet.

Zähne 140 des Zahnkranzes 138 ragen von dem Steg 134 in eine Richtung von der Wand 116a weg. Sie sind mindestens näherungsweise parallel zu der Drehachse 120 orientiert.

Bei einem Ausführungsbeispiel ist die Drehachse 120 mindestens näherungsweise parallel zu einer Radachse der Hinterradeinrichtung 114 und/oder der Drehachse 40 der (Haupt-)Kehrwalze 38 orientiert.

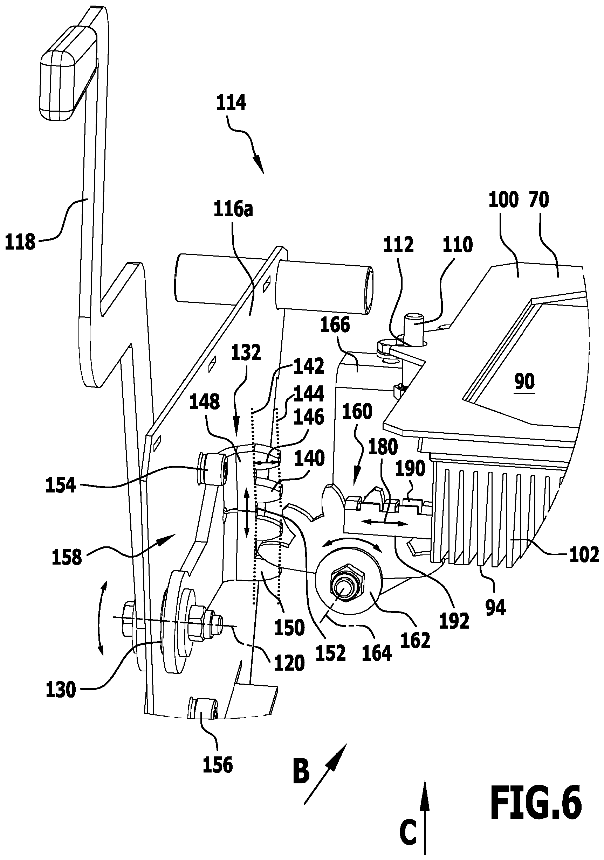

Die Zähne 140 des Zahnkranzes 138 der ersten Zahnkranzeinrichtung 132 weisen einen Fußbereich 142 und einen Kopfbereich 144 (Figur 6) auf. Eine Abstandsrichtung 146 zwischen dem Fußbereich 142 und dem Kopfbereich 144 ist mindestens näherungsweise parallel zu der Drehachse 120; sie ist exakt parallel oder es liegt eine kleine Abweichung in einem spitzen Winkel von höchstens 25° vor.

Die Abstandsrichtung 146 liegt quer und insbesondere mindestens näherungsweise senkrecht zu der Wand 116a.

Eine Fußlinie des Fußbereichs 142 ist vorzugsweise mindestens näherungsweise eine Gerade.

Eine Kopflinie des Kopfbereichs 144 ist gekrümmt; bei einem Ausführungsbeispiel ist sie keine Kreislinie.

Der Zahnkranz 138 der ersten Zahnkranzeinrichtung 132 weist (mindestens) ein erstes Segment 148 und ein zweites Segment 150 an Zähnen 140 auf. Das erste Segment 148 und das zweite Segment 150 sind durch einen Spalt 152 getrennt. Es ist möglich, dass der Spalt 152 durch eine Beabstandung zwischen dem ersten Segment 148 und dem zweiten Segment 150 gebildet ist, oder dass an dem Spalt 152 das erste Segment 148 und das zweite Segment 150 aneinander stoßen.

Die erste Zahnkranzeinrichtung 132 mit dem Steg 134 und dem Zahnkranz 138 ist bei einem Ausführungsbeispiel durch einen Schneidvorgang wie einem Stanzvorgang oder Laserschneidvorgang hergestellt. Sie ist dabei aus einem entsprechenden Blechmaterial hergestellt. Das erste Segment 148 und das zweite Segment 150 werden durch Umbiegen bzw. Umfalzen an dem Steg 134 hergestellt. Durch das Vorsehen von mindestens zwei unterschiedlichen Segmenten 148, 150 lässt sich eine gekrümmte Kopflinie an dem Kopfbereich 144 erreichen.

An der Wand 116a sind in den Schmutzraum 92 weisend ein erstes Anschlag 154 und ein zweiter Anschlag 156 angeordnet. Der erste Anschlag 154 und der zweite Anschlag 156 dienen zur Begrenzung der Drehbeweglichkeit des Stegs 134 und damit der ersten Zahnkranzeinrichtung 132 und damit wiederum des Schwenkhebels 118. Der erste Anschlag 154 und der zweite Anschlag 156 definieren die äußeren Grenzwinkel, zwischen welchen der Steg 134 (und damit die erste Zahnkranzeinrichtung 132 und damit der Schwenkhebel 118) drehbar ist.

Der Zahnkranz 138 der ersten Zahnkranzeinrichtung 132 ist beabstandet zu dem Drehlager 122 angeordnet.

Die erste Zahnkranzeinrichtung 132 bildet einen Teil eines Winkelgetriebes 158.

Dieses Winkelgetriebe 158 umfasst eine zweite Zahnkranzeinrichtung 160, welche zum Eingriff an der ersten Zahnkranzeinrichtung 132 vorgesehen ist.

Die zweite Zahnkranzeinrichtung 160 weist einen Zahnkranz 162 auf, welcher um eine Drehachse 164 drehbar in dem Schmutzraum 92 gelagert ist. Die Drehachse 164 ist dabei quer und insbesondere senkrecht zu der Drehachse 120 orientiert.

Bei einem Ausführungsbeispiel ist die Drehachse 164 mindestens näherungsweise parallel zu einer Längserstreckungsrichtung des Fahrgestells 12 zwischen dem hinteren Ende 30 und dem vorderen Ende 18 senkrecht zu einer Radachse der Hinterradeinrichtung 14 orientiert.

An der Wandung 104 sitzt in den Schmutzraum 92 ragend ein Halter 66. Der Stift 110 kann Teil eines Befestigungselements 168 sein, über welches der Halter 166 an der Wandung 104 fixiert ist. Der Halter 66 ist insbesondere neben der Filtereinrichtung 70 angeordnet.

Der Zahnkranz 162 ist an dem Halter 166 über ein Drehlager 170 um die Drehachse 164 drehbar gelagert.

Der Zahnkranz 162 der zweiten Zahnkranzeinrichtung 160 des Winkelgetriebes 158 weist eine Mehrzahl von Zähnen 172 auf, wobei ein Zahneingriff der zweiten Zahnkranzeinrichtung 160 mit ihren Zähnen 172 an dem Zahnkranz 138 mit seinen Zähnen 140 der ersten Zahnkranzeinrichtung 132 vorliegt.

Eine Drehbewegung der ersten Zahnkranzeinrichtung 132 um die Drehachse 120 führt zu einer Drehbewegung des Zahnkranzes 162 der zweiten Zahnkranzeinrichtung 160 um die Drehachse 164, wobei die Drehachse 164 und die Drehachse 120 durch das Winkelgetriebe 158 in einem Winkel zueinander stehen.

Wie oben erwähnt, liegt dieser Winkel bei einem Ausführungsbeispiel bei 90°.

Die erste Zahnkranzeinrichtung 132 und die zweite Zahnkranzeinrichtung 160 sind so aneinander angepasst ausgebildet, dass das entsprechende Winkelgetriebe 158 trocken betreibbar ist. Dieses Winkelgetriebe 158 ist gehäusefrei in dem Filtergehäuse 74 in dem Schmutzraum 92 angeordnet und Schmutz ausgesetzt. Die erste Zahnkranzeinrichtung 132 und die zweite Zahnkranzeinrichtung 160 sind so mit Spiel aneinander angepasst, dass Schmutzablagerungen an dem Winkelgetriebe 158 die Funktionsweise nicht behindern. Eine drehmomentenwirksame Kopplung der zweiten Zahnkranzeinrichtung 160 an die erste Zahnkranzeinrichtung 132 erfolgt mit derartigem Spiel, dass ein schmierungsfreier Betrieb ermöglicht ist.

Die Abreinigungseinrichtung 114 weist einen beweglichen Abstreifer 174 auf, welcher durch den Schwenkhebel 118 über das Winkelgetriebe 158 in seiner Bewegung angetrieben ist.

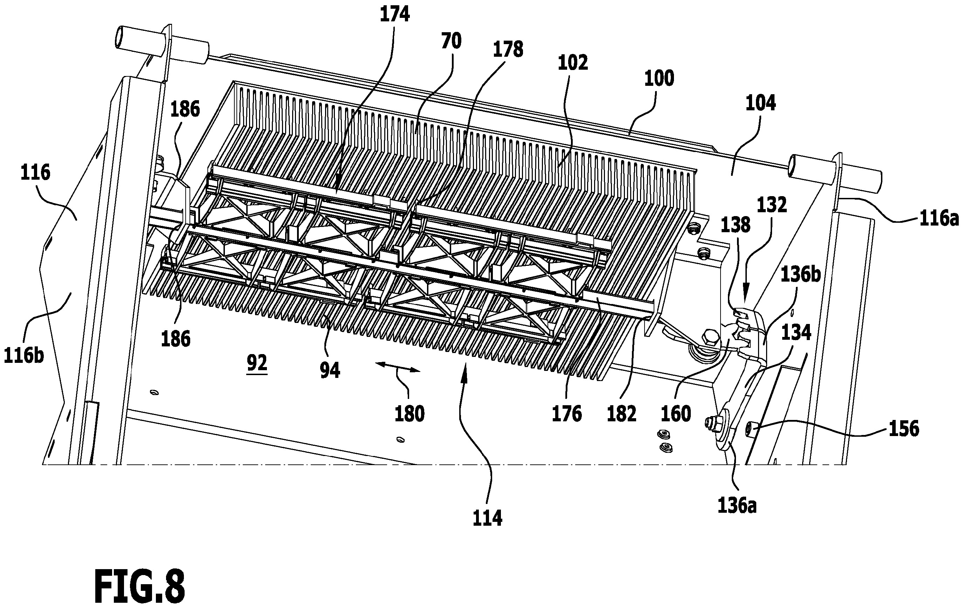

Dieser Abstreifer 174 umfasst (mindestens) eine Stange 176 (Figur 8), welche in dem Filtergehäuse 74 in dem Schmutzraum 92 unterhalb der Filtereinrichtung 70 positioniert ist.

An der Stange 176 sind Einwirkelemente 178 angeordnet, welche auf die Falten 102 der Filtereinrichtung 70 einwirken können und Staubpartikel von der Filtereinrichtung 70 abstreifen können.

Bei einem Ausführungsbeispiel sind die Einwirkelemente 178 rechenartig ausgebildet, wobei eine Mehrzahl von Einwirkelementen beabstandet in einer Längsrichtung (welche koaxial zu einer Bewegungsrichtung des Abstreifers 174 ist) sind.

Es ist vorgesehen, dass die Einwirkelemente 178 auf die Filtereinrichtung 70 auf eine möglichst große Länge und auf eine möglichst große Breite einwirken.

Die Stange 176 und damit der Abstreifer 174 sind verschieblich in einer Richtung/Gegenrichtung 180 (vergleiche Figur 6) gelagert. Diese Richtung/Gegenrichtung 180 liegt mindestens näherungsweise senkrecht zu der Drehachse 164 und mindestens näherungsweise parallel zu der Drehachse 120.

Der Halter 166 weist eine Öffnung 182 auf, durch welche die Stange 176 durchgetaucht ist und in der Richtung/Gegenrichtung 180 verschieblich gelagert ist.

An der gegenüberliegenden Wand 116b ist ein weiterer Halter 184 mit einer Öffnung 186 angeordnet. Durch die Öffnung 186 ist die Stange 176 ebenfalls durchgetaucht. Diese Öffnung 186 bildet ein Gegenlager zu der Öffnung 182.

Die Stange 176 ist in einem Bereich 188, welcher der Wand 116a zugewandt ist (und der Wand 116b abgewandt ist) mit Ausnehmungen 190 versehen. Ferner ist die Stange 176 in diesem Bereich 180 U-profilförmig oder L-profilförmig ausgebildet mit einem Zwischenraum 192. Über diesen Zwischenraum 192 und die beabstandeten Ausnehmungen 190 ist der Abstreifer 174 an die zweite Zahnkranzeinrichtung 160 gekoppelt. Über den Zwischenraum 192 ist die Stange 176 auf den Zahnkranz 162 der zweiten Zahnkranzeinrichtung 160 aufgesetzt. Zähne 172 der zweiten Zahnkranzeinrichtung 160 können in die Ausnehmungen 180 eintauchen.

Es lässt sich dadurch eine Drehbewegung des Zahnkranzes 162 der zweiten Zahnkranzeinrichtung 160 in eine lineare Verschiebungsbewegung der Stange 176 und damit des Abstreifers 174 umsetzen, wobei die Schwenkrichtung des Schwenkhebels 118 bestimmt, ob eine Bewegung in der Richtung 180 oder in der Gegenrichtung dazu erfolgt.

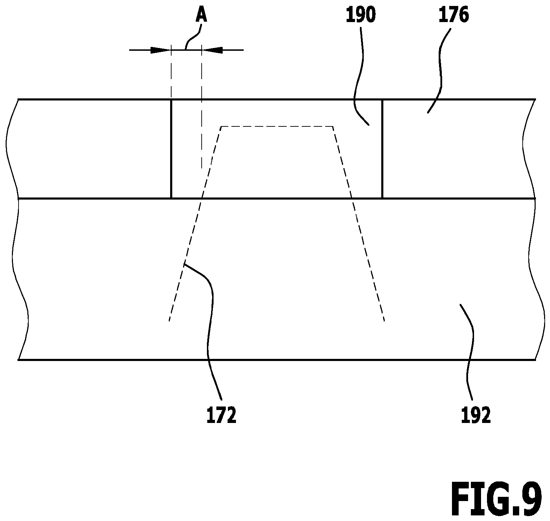

Die Stange 176 ist im Bereich 188 mit den Ausnehmungen 190 und dem Zwischenraum 192 so ausgebildet (vergleiche Figur 9), dass eine Bewegung der Stange 176 in der Richtung/Gegenrichtung 180 bei der Ankopplung an das Winkelgetriebe 158 im Trockenlauf bzw. schmierungsfrei ermöglicht ist.

Eine Ausnehmung 190 ist in Zusammenwirkung mit dem Zwischenraum 192 so an einen Zahn 172 angepasst ausgebildet, dass in jeder Stellung eines Zahns 172 in einer zugeordneten Ausnehmung 190 ein Abstand A von mindestens 0,5 mm zu einer Wandung vorliegt.

Wenn beispielsweise ein Zahn an eine Wandung anstößt, dann liegt mindestens ein Abstand A zu einer gegenüberliegenden Wandung vor. Wenn ein Zahn 172, wie in Figur 9 angedeutet, nicht an eine Wandung einer Ausnehmung 190 anstößt, so liegt dennoch ein Mindestabstand A vor.

Dadurch ist eben ein schmierungsfreier Betrieb möglich. Auch ein Absetzen von Staubpartikeln in den Ausnehmungen 190 behindert den Betrieb nicht.

Die Bodenreinigungsmaschine 10 funktioniert wie folgt:
Bei ordnungsgemäßem Betrieb der Bodenreinigungsmaschine 10 insbesondere als Kehrmaschine sitzt ein Benutzer auf dem Bedienersitz 78.

Die Seitenbesen 48 wirken auf eine zu reinigende Fläche. Kehrgut wird über die (Haupt-)Kehrwalze 38 in den Kanal 54 befördert. Dies wird unterstützt durch einen Saugstrom der Saugeinrichtung 66. Kehrgut wird in der Behältereinrichtung 56 gesammelt.

Die Filtereinrichtung 70 verhindert, dass Staubpartikel zu der Gebläseeinrichtung 68 gelangen können.

Wenn die Filtereinrichtung 70 mit Staubpartikeln zugesetzt ist, dann ist eine Filterabreinigung durch die Abreinigungseinrichtung 114 erforderlich.

Es kann beispielsweise vorgesehen sein, dass ein oder mehrere Sensoren die Notwendigkeit eines Abreinigungsvorgang dem Benutzer anzeigen.

Der Benutzer kann dann über die Abreinigungseinrichtung 114 eine manuelle Abreinigung der Filtereinrichtung 70 durchführen. Dies kann er von seiner Bedienerposition auf den Bedienersitz 78 durchführen; er greift den Schwenkhebel 118 und führt eine mehrmalige Schwenk-Vor- und Rückbewegung an dem Schwenkhebel 118 durch.

Durch diese Schwenkbewegung wird die erste Zahnkranzeinrichtung 132 angetrieben und in Folge davon die zweite Zahnkranzeinrichtung 160 hin- und hergedreht. Dies führt zu einer Vor- und Rückwärtsbewegung des Abstreifers 174 in der Richtung/Gegenrichtung 180. Die Einwirkelemente 178 wirken auf die Filtereinrichtung 170 ein und rütteln insbesondere an dieser. Dabei können Schmutzpartikel von der Filtereinrichtung 70 gelöst werden. Sie fallen insbesondere direkt in die Behältereinrichtung 56.

Der normale Betrieb kann dann fortgesetzt werden.

Erfindungsgemäß wird eine Abreinigungseinrichtung 114 bereitgestellt, welche auf einfache Weise durch einen Benutzer der Bodenreinigungsmaschine 10 bedienbar ist. Er muss insbesondere nicht von der Bodenreinigungsmaschine 10 absteigen bzw. seinen generellen Reinigungsvorgang unterbrechen, um eine notwendige Filterabreinigung durchzuführen.

Die Abreinigungseinrichtung 114 mit dem Winkelgetriebe 158 ist auf konstruktiv einfache Weise ausgebildet und mechanisch robust. Es ist ein solches Spiel zwischen der ersten Zahnkranzeinrichtung 132 und der zweiten Zahnkranzeinrichtung 160 des Winkelgetriebes 158 vorgesehen, und ein solches Spiel zwischen der zweiten Zahnkranzeinrichtung 160 und der Stange 176 vorgesehen, dass wesentliche Teile der Abreinigungseinrichtung 114 ohne eigenes Getriebegehäuse oder dergleichen in dem Schmutzraum 92 positionierbar sind. Die Abreinigungseinrichtung 118 ist im Trockenlauf betreibbar, das heißt das Winkelgetriebe 158 und die Ankopplung an die Stange 176 erfordert keine Schmierung.

Erfindungsgemäß wird eine einfach bedienbare und wartungsarme Bodenreinigungsmaschine 10 bereitgestellt.

Grundsätzlich ist die Ausbildung der Abreinigungseinrichtung 114 mit einer Bedienbarkeit von einer normalen Benutzerposition eines Bedieners, einem Schwenkhebel und der Ankopplung an ein Winkelgetriebe auch bei anderen Maschinen wie beispielsweise Schrubbmaschinen möglich, sofern diese eine Filtereinrichtung aufweisen.

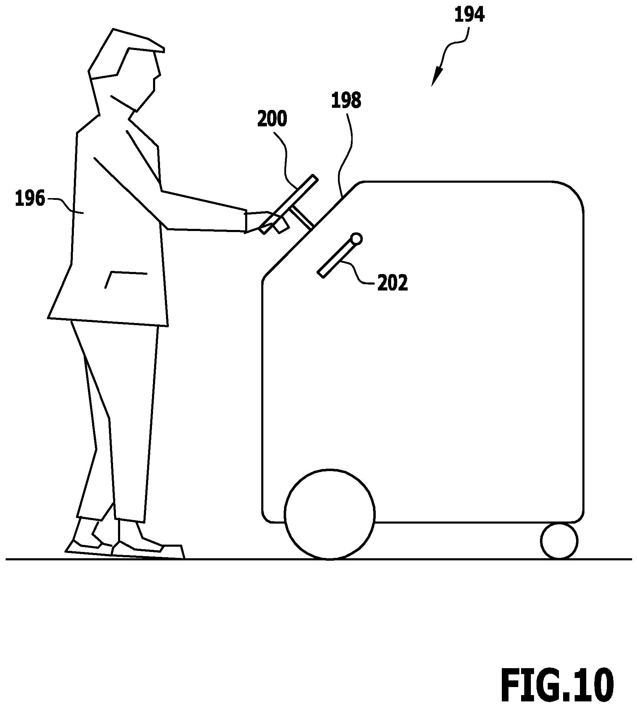

Die erfindungsgemäße Lösung lässt sich beispielsweise auch bei einer Bodenreinigungsmaschine 194 (Figur 10) realisieren, welche eine Nachläufermaschine ist. Bei einer solchen Nachläufermaschine ist ein Benutzer 196 hinter der Maschine positioniert und läuft dieser im Betrieb nach. Die Bodenreinigungsmaschine 194 hat ein Bedienungspanel 198 mit beispielsweise einem Lenkrad 200.

Die Bodenreinigungsmaschine 194 weist eine Abreinigungseinrichtung entsprechend der Abreinigungseinrichtung 114 auf mit einem Schwenkhebel 202, welcher so angeordnet ist, dass der Bediener 196 bei ordnungsgemäßem Betrieb der Bodenreinigungsmaschine 194 (als "Nachläufer") mit einer Hand den Schwenkhebel 202 bedienen kann, um eine Filterabreinigung wie oben beschrieben durch Einwirkung auf einen Winkelgetriebe und eine bewegliche Stange 176 zu bewirken.

Die erfindungsgemäße Lösung kann beispielsweise auch bei einer Aufstehmaschine realisiert werden. Diese entspricht von Prinzip her einer Nachläufermaschine, wobei der Benutzer anstatt der Maschine nachzulaufen, hinten an ihr aufsteht und sich mit dieser bewegt.

Die erfindungsgemäße Lösung ist insbesondere an einer Bodenreinigungsmaschine realisiert, welche selbstfahrend ist, das heißt bei welcher eine Fahrbewegung durch einen Fahrmotor angetrieben ist.

### Bezugszeichenliste

- 10: Bodenreinigungsmaschine (Erstes Ausführungsbeispiel)
- 12: Fahrgestell
- 14: Hinterradeinrichtung
- 14a: Rechtes Hinterrad
- 14b: Linkes Hinterrad
- 16: Vorderrad
- 18: Vorderes Ende
- 20: Säulenelement
- 22: Lenkstangeneinrichtung
- 24: Lenkradeinrichtung
- 26: Antrieb
- 28: Batterieeinrichtung
- 30: Hinteres Ende
- 32: Batteriehalter
- 34: Verbrennungsmotor
- 36: Generator
- 38: Kehrwalze
- 40: Drehachse
- 42: Antriebsmotor
- 44: Drehmomentenübertragungseinrichtung
- 46: Welle
- 48a: Rechter Seitenbesen
- 48b: Linker Seitenbesen
- 50: Drehachse
- 52: Einkopplungsmündung
- 54: Kanal
- 56: Behältereinrichtung
- 56a: Erster Behälter
- 56b: Zweiter Behälter
- 58: Gehäuse
- 60: Aufnahmeraum
- 62: Fixierungseinrichtung
- 64: Rolle
- 66: Saugeinrichtung
- 68: Gebläseeinrichtung
- 70: Filtereinrichtung
- 72: Saugkanal
- 74: Filtergehäuse
- 76: Filterkante
- 78: Bedienersitz
- 80: Wandung
- 82: Freiraum
- 84: Bodenwandung
- 86: Deckel
- 88: Reinraum
- 90: Reinseite
- 92: Schmutzraum
- 94: Schmutzseite
- 96: Schürze
- 98: Kehrkantenelement
- 100: Rahmen
- 102: Falten
- 104: Wandung
- 106: Öffnung
- 108: Oberseite
- 110: Stift
- 112: Ausnehmung
- 114: Abreinigungseinrichtung
- 116: Wandung
- 116a: Wand
- 116b: Wand
- 118: Schwenkhebel
- 120: Drehachse
- 122: Drehlager
- 124: Öffnung
- 126: Dichtung
- 128a: Schenkel
- 128b: Schenkel
- 130: Halteelement
- 131: Welle
- 132: Erste Zahnkranzeinrichtung
- 134: Steg
- 136a: Erstes Ende
- 136b: Zweites Ende
- 138: Zahnkranz
- 140: Zahn
- 142: Fußbereich
- 144: Kopfbereich
- 146: Abstandsrichtung
- 148: Erstes Segment
- 150: Zweites Segment
- 152: Spalt
- 154: Erster Anschlag
- 156: Zweiter Anschlag
- 158: Winkelgetriebe
- 160: Zweite Zahnkranzeinrichtung
- 162: Zahnkranz
- 164: Drehachse
- 166: Halter
- 168: Befestigungselement
- 170: Drehlager
- 172: Zahn
- 174: Abstreifer
- 176: Stange
- 178: Einwirkelement
- 180: Richtung/Gegenrichtung
- 182: Öffnung
- 184: Halter
- 186: Öffnung
- 188: Bereich
- 190: Ausnehmung
- 192: Zwischenraum
- 194: Bodenreinigungsmaschine (Zweites Ausführungsbeispiel)
- 196: Benutzer
- 198: Bedienungspanel
- 200: Lenkrad
- 202: Schwenkhebel
- A: Mindestabstand

## Patentansprüche

1. Bodenreinigungsmaschine, umfassend eine Saugeinrichtung (66), eine Filtereinrichtung (70), welche der Saugeinrichtung (66) zugeordnet ist, und eine Abreinigungseinrichtung (114) für die Filtereinrichtung (70),
wobei die Abreinigungseinrichtung (114) einen Schwenkhebel (118; 202) umfasst, welcher so angeordnet ist, dass er für einen Bediener der Bodenreinigungsmaschine, welcher für einen ordnungsgemäßen Betrieb der Bodenreinigungsmaschine positioniert ist, bedienbar ist, wobei die Abreinigungseinrichtung (114) einen beweglichen Abstreifer (174) für die Filtereinrichtung (70) umfasst und wobei eine Schwenkbewegung des Schwenkhebels (118; 202) eine Abreinigungsbewegung des Abstreifers (174) an der Filtereinrichtung (70) bewirkt, **dadurch gekennzeichnet,**
**dass** die Abreinigungseinrichtung (114) ein Winkelgetriebe (158) umfasst, an welches der Schwenkhebel (118; 202) gekoppelt ist, und dass der bewegliche Abstreifer (174) an das Winkelgetriebe (158) gekoppelt ist.

2. Bodenreinigungsmaschine nach Anspruch 1, **dadurch gekennzeichnet, dass** das Winkelgetriebe (158) in einem Schmutzraum (92) angeordnet ist, welcher an eine Schmutzseite (94) der Filtereinrichtung (70) grenzt, insbesondere mit mindestens einem der Folgenden:
- der Abstreifer (174) ist in dem Schmutzraum (92) angeordnet;
- das Winkelgetriebe (158) ist getriebegehäusefrei in dem Schmutzraum (92) angeordnet.

3. Bodenreinigungsmaschine nach einem der vorangehenden Ansprüche, **gekennzeichnet durch** ein Filtergehäuse (74), in welchem die Filtereinrichtung (70) angeordnet ist, wobei das Filtergehäuse (74) einen Reinraum (88) bildet, welcher an eine Reinseite (90) der Filtereinrichtung (70) grenzt und an welchen eine Gebläseeinrichtung (68) der Saugeinrichtung (66) fluidwirksam angeschlossen ist, und wobei das Filtergehäuse (74) einen Schmutzraum (92) bildet, welcher an eine Schmutzseite (94) der Filtereinrichtung (70) angrenzt und welcher in fluidwirksamer Verbindung mit einer Saugmündung (52) der Saugeinrichtung (66) steht, insbesondere mit mindestens einem der Folgenden:
- der Schwenkhebel (118; 202) ist an einer Wand (116a) des Filtergehäuses (74) drehbar gelagert;
- mindestens ein Teil des Winkelgetriebes (158) ist an einer Wandung (116; 104) des Filtergehäuses (74) angeordnet und/oder fixiert und/oder montiert und/oder mit diesem verbunden.

4. Bodenreinigungsmaschine nach einem der vorangehenden Ansprüche, **dadurch gekennzeichnet, dass** der Schwenkhebel (118; 202) drehfest mit einer Welle (131) verbunden ist, welche drehbar an einer Wand (116a) gelagert ist,
und insbesondere **dadurch gekennzeichnet, dass** eine erste Zahnkranzeinrichtung (132) des Winkelgetriebes (158) drehfest mit der Welle (131) verbunden ist,
und insbesondere **dadurch gekennzeichnet, dass** die Wand (116a) zwischen dem Schwenkhebel (118; 202) und der ersten Zahnkranzeinrichtung (132) angeordnet ist.

5. Bodenreinigungsmaschine nach Anspruch 4, **gekennzeichnet durch** mindestens eines der Folgenden:
- ein Zahn (140) der ersten Zahnkranzeinrichtung (132) weist eine Abstandsrichtung (146) zwischen einem Fußbereich (142) und einem Kopfbereich (144) auf, welche mindestens näherungsweise parallel zu einer Drehachse (120) der Welle (131) ist;
- die erste Zahnkranzeinrichtung (132) ist als Schwinge ausgebildet und insbesondere sind Zähne (140) der ersten Zahnkranzeinrichtung (132) beabstandet zu einer Drehachse (120) der Welle (131) und insbesondere beabstandet zu der Welle (131);
- der ersten Zahnkranzeinrichtung (132) ist ein erster Anschlag (154) und/oder ein zweiter Anschlag (156) zur Begrenzung einer Schwenkbeweglichkeit zugeordnet,
und insbesondere ist der erste Anschlag (154) und/oder der zweite Anschlag (156) an der Wand (116a) angeordnet.

6. Bodenreinigungsmaschine nach Anspruch 4 oder 5, **dadurch gekennzeichnet, dass** ein Zahnkranz (138) der ersten Zahnkranzeinrichtung (132) mindestens ein erstes Segment (148) mit Zähnen (140) und ein zweites Segment (150) mit Zähnen (140) aufweist, wobei das erste Segment (148) und das zweite Segment (150) jeweils mit einem Steg (134) verbunden sind und quer zu dem Steg (134) orientiert sind, und wobei zwischen dem ersten Segment (148) und dem zweiten Segment (150) ein Spalt (152) liegt,
und insbesondere **dadurch gekennzeichnet, dass** das erste Segment (148) und das zweite Segment (150) einstückig mit dem Steg (134) verbunden sind und durch Biegen oder Falten hergestellt sind.

7. Bodenreinigungsmaschine nach einem der Ansprüche 4 bis 6, **dadurch gekennzeichnet, dass** die erste Zahnkranzeinrichtung (132) mindestens teilweise durch einen Schneidvorgang hergestellt ist.

8. Bodenreinigungsmaschine nach einem der Ansprüche 4 bis 7, **dadurch gekennzeichnet, dass** das Winkelgetriebe (158) eine zweite Zahnkranzeinrichtung (160) umfasst, welche an die erste Zahnkranzeinrichtung (132) drehmomentwirksam gekoppelt ist, und insbesondere mit mindestens einem der Folgenden:
- die zweite Zahnkranzeinrichtung (160) ist drehbar um eine Drehachse (164), welche quer und insbesondere senkrecht zu einer Drehachse (120) der ersten Zahnkranzeinrichtung (132) orientiert ist;
- die erste Zahnkranzeinrichtung (132) und die zweite Zahnkranzeinrichtung (160) sind so aneinander mit Spiel angepasst ausgebildet, dass das Winkelgetriebe (158) schmierungsfrei betreibbar ist;
- die zweite Zahnkranzeinrichtung (160) ist an den Abstreifer (174) gekoppelt.

9. Bodenreinigungsmaschine nach einem der vorangehenden Ansprüche, **dadurch gekennzeichnet, dass** die Filtereinrichtung (70) einen Flachfaltenfilter umfasst und dass der Abstreifer (174) eine Mehrzahl von Wirkelementen (178) auf Falten (102) der Filtereinrichtung (70) aufweist.

10. Bodenreinigungsmaschine nach einem der vorangehenden Ansprüche, **dadurch gekennzeichnet, dass** der Abstreifer (174) verschieblich geführt ist.

11. Bodenreinigungsmaschine nach einem der vorangehenden Ansprüche, **dadurch gekennzeichnet, dass** der Abstreifer (174) mindestens eine Stange (176) aufweist, welche mit Ausnehmungen (190) versehen ist, an welche Zähne (172) einer Zahnkranzeinrichtung (160) des Winkelgetriebes (158) eingreifbar sind, wobei in einer bestimmten Stellung des Abstreifers (174) in mindestens eine Ausnehmung (190) der mindestens einen Stange (176) ein Zahn (172) der Zahnkranzeinrichtung (160) eingreift,
und insbesondere **dadurch gekennzeichnet, dass** die mindestens eine Stange (176) und die eingreifende Zahnkranzeinrichtung (160) so aneinander angepasst mit Spiel ausgebildet sind, dass ein schmierungsfreier Betrieb ermöglicht ist,
und insbesondere **dadurch gekennzeichnet, dass** bei Eingriff eines Zahns (172) der Zahnkranzeinrichtung (160) an einer Ausnehmung (190) der mindestens einen Stange (176) an mindestens einer Stelle ein Abstand (A) zwischen einem Zahn (172) und einer Wandung der Ausnehmung (190) mindestens 0,5 mm beträgt.

12. Bodenreinigungsmaschine nach einem der vorangehenden Ansprüche, **dadurch gekennzeichnet, dass** der Abstreifer (174) an einem Halter (184) verschieblich gelagert ist, welcher an einer Aufnahmewandung (104) für die Filtereinrichtung (70) sitzt.

13. Bodenreinigungsmaschine nach einem der vorangehenden Ansprüche, **dadurch gekennzeichnet, dass** eine Zahnkranzeinrichtung (160) des Winkelgetriebes (158) an einem Halter (184) drehbar gelagert ist, welcher an einer Aufnahmewandung (104) für die Filtereinrichtung (70) sitzt, und insbesondere dass an dem Halter (184) auch der Abstreifer (174) beweglich gelagert ist.

14. Bodenreinigungsmaschine nach einem der vorangehenden Ansprüche, **gekennzeichnet durch** eine Ausbildung als Kehrmaschine.

15. Bodenreinigungsmaschine nach einem der vorangehenden Ansprüche, **gekennzeichnet durch** eine Ausbildung als Aufsitzmaschine, wobei der Schwenkhebel (118) so angeordnet ist, dass er von einem sitzenden Benutzer bedienbar ist, oder
**gekennzeichnet durch** eine Ausbildung als Nachläufermaschine oder Aufstehmaschine, wobei der Schwenkhebel (202) so angeordnet ist, dass er von einem Benutzer (196) der Bodenreinigungsmaschine in seiner Stehstellung an der Bodenreinigungsmaschine bedienbar ist.

## Claims

1. Floor cleaning machine, comprising a suction device (66), a filter device (70) which is associated with the suction device (66), and a filter cleaning device (114) for the filter device (70), wherein the filter cleaning device (114) comprises a pivot lever (118; 202) which is arranged such that the pivot lever (118; 202) is operable by an operator of the floor cleaning machine who is properly positioned for operation of the floor cleaning machine as normally intended, wherein the filter cleaning device (114) comprises a movable scraper (174) for the filter device (70) and wherein a pivoting movement of the pivot lever (118; 202) effects a cleaning movement of the scraper (174) on the filter device (70), **characterized in that** the cleaning device (114) comprises an angular gear (158) to which the pivot lever (118; 202) is coupled, and **in that** the movable scraper (174) is coupled to the angular gear (158).

2. Floor cleaning machine in accordance with claim 1, **characterized in that** the angular gear (158) is arranged in a dirt chamber (92) which is adjacent to a dirty side (94) of the filter device (70), in particular with at least one of the following:
- the scraper (174) is arranged in the dirt chamber (92);
- the angular gear (158) is arranged in the dirt chamber (92) without a gear housing.

3. Floor cleaning machine in accordance with any one of the preceding claims, **characterized by** a filter housing (74) in which the filter device (70) is arranged, wherein the filter housing (74) forms a clean chamber (88) which is adjacent to a clean side (90) of the filter device (70) and to which a blower device (68) of the suction device (66) is operatively connected for fluid communication therewith, and wherein the filter housing (74) forms a dirt chamber (92) which is adjacent to a dirty side (94) of the filter device (70) and which is operatively connected for fluid communication with a suction mouth (52) of the suction device (66), in particular with at least one of the following:
- the pivot lever (118; 202) is supported for rotation on a wall (116a) of the filter housing (74);
- at least a part of the angular gear (158) is arranged at a wall (116; 104) of the filter housing (74) and/or fixed thereto and/or mounted thereto and/or is connected to the filter housing (74).

4. Floor cleaning machine in accordance with any one of the preceding claims, **characterized in that** the pivot lever (118; 202) is connected to a shaft (131) in rotationally fixed relation thereto, which shaft (131) is supported for rotation on a wall (116a),
and in particular **characterized in that** a first toothed rim device (132) of the angular gear (158) is connected to the shaft (131) in rotationally fixed relation therewith,
and in particular **characterized in that** the wall (116a) is arranged between the pivot lever (118; 202) and the first toothed rim device (132).

5. Floor cleaning machine in accordance with claim 4, **characterized by** at least one of the following:
- a tooth (140) of the first toothed rim device (132) has a direction (146) of the distance between a root portion (142) and a tip portion (144) thereof which is at least approximately parallel to an axis of rotation (120) of the shaft (131);
- the first toothed rim device (132) is configured as a rocker and, in particular, teeth (140) of the first toothed rim device (132) are spaced relative to an axis of rotation (120) of the shaft (131), and are in particular spaced relative to the shaft (131);
- the first toothed rim device (132) has associated therewith a first stop (154) and/or a second stop (156) for limiting a pivotal mobility,
- and, in particular, the first stop (154) and/or the second stop (156) is arranged at the wall (116a).

6. Floor cleaning machine in accordance with claim 4 or 5, **characterized in that** a toothed rim (138) of the first toothed rim device (132) has at least a first segment (148) with teeth (140) and a second segment (150) with teeth (140), wherein the first segment (148) and the second segment (150) are each connected to a web (134) and are oriented transversely to the web (134), and wherein a gap (152) is located between the first segment (148) and the second segment (150),
and in particular **characterized in that** the first segment (148) and the second segment (150) are connected in one piece to the web (134) and are formed by bending or folding.

7. Floor cleaning machine in accordance with claim 4 to 6, **characterized in that** the first toothed rim device (132) is at least in part formed through a cutting process.

8. Floor cleaning machine in accordance with claim 4 to 7, **characterized in that** the angular gear (158) comprises a second toothed rim device (160) which is operatively coupled to the first toothed rim device (132) for torque transmission, and in particular with at least one of the following:
- the second toothed rim device (160) is rotatable about an axis of rotation (164) which is oriented transversely and in particular perpendicularly to an axis of rotation (120) of the first toothed rim device (132);
- the first toothed rim device (132) and the second toothed rim device (160) are configured to conform to one another with play such that the angular gear (158) is operable without lubrication;
- the second toothed rim device 160 is coupled to the scraper (174).

9. Floor cleaning machine in accordance with any one of the preceding claims, **characterized in that** the filter device (70) comprises a flat pleated filter and **in that** the scraper (174) has a plurality of operative elements (178) for acting on pleats (102) of the filter device (70).

10. Floor cleaning machine in accordance with any one of the preceding claims, **characterized in that** the scraper (174) is displaceably guided.

11. Floor cleaning machine in accordance with any one of the preceding claims, **characterized in that** the scraper (174) comprises at least one bar (176) which is provided with recesses (190) engageable by teeth (172) of a toothed rim device (160) of the angular gear (158), wherein in a certain position of the scraper (174), a tooth (172) of the toothed rim device (160) engages in at least one recess (190) of the at least one bar (176),
and in particular **characterized in that** the at least one bar (176) and the meshing toothed rim device (160) are configured to conform to one another with play such that lubrication-free operation is enabled,
and in particular **characterized in that**, when a tooth (172) of the toothed rim device (160) engages a recess (190) of the at least one bar (176), a distance (A) between a tooth (172) and a wall of the recess (190) is at least 0.5 mm at at least one location.

12. Floor cleaning machine in accordance with any one of the preceding claims, **characterized in that** the scraper (174) is supported for displacement on a holder (184) which is located at a receiving wall (104) for the filter device (70).

13. Floor cleaning machine in accordance with any one of the preceding claims, **characterized in that** a toothed rim device (160) of the angular gear (158) is supported for rotation on a holder (184) which is located at a receiving wall (104) for the filter device (70), and in particular **in that** the scraper (174) is also supported for movement on the holder (184).

14. Floor cleaning machine in accordance with any one of the preceding claims, **characterized by** being configured in the form of a sweeping machine.

15. Floor cleaning machine in accordance with any one of the preceding claims, **characterized by** being configured in the form of a ride-on machine, wherein the pivot lever (118) is arranged such that it can be operated by a seated user, or
**characterized by** being configured in the form of a walk-behind machine or a stand-on machine, wherein the pivot lever (202) is arranged such that it can be operated by a user (196) of the floor cleaning machine from the user's standing position at the surface cleaning machine.

## Revendications

1. Machine de nettoyage du sol, comprenant un dispositif d'aspiration (66), un dispositif de filtrage (70), lequel est associé au dispositif d'aspiration (66), et un dispositif de nettoyage (114) pour le dispositif de filtrage (70), dans laquelle le dispositif de nettoyage (114) comprend un levier pivotant (118 ; 202) qui est disposé de telle sorte qu'il peut être utilisé par un utilisateur de la machine de nettoyage du sol, lequel est positionné pour un fonctionnement en bonne et due forme de la machine de nettoyage du sol, dans laquelle le dispositif de nettoyage (114) comprend un racloir (174) mobile pour le dispositif de filtrage (70) et dans laquelle un déplacement par pivotement du levier pivotant (118 ; 202) entraîne un déplacement de nettoyage du racloir (174) sur le dispositif de filtrage (70), **caractérisée en ce**
**que** le dispositif de nettoyage (114) comprend un engrenage conique (158), auquel le levier pivotant (118 ; 202) est couplé,
et **que** le racleur (174) mobile est couplé à l'engrenage conique (158).

2. Machine de nettoyage du sol selon la revendication 1, **caractérisée en ce que** l'engrenage conique (158) est disposé dans un espace pour impuretés (92), lequel jouxte un côté pour impuretés (94) du dispositif de filtrage (70), en particulier avec au moins une des caractéristiques suivantes :
- le racloir (174) est disposé dans l'espace pour impuretés (92) ;
- l'engrenage conique (158) est disposé sans boîtier d'engrenage dans l'espace pour impuretés (92).

3. Machine de nettoyage du sol selon l'une quelconque des revendications précédentes, **caractérisée par** un boîtier de filtrage (74), dans lequel le dispositif de filtrage (70) est disposé, dans laquelle le boîtier de filtrage (74) forme une salle blanche (88), laquelle jouxte un côté propre (90) du dispositif de filtrage (70) et à laquelle un dispositif de soufflante (68) du dispositif d'aspiration (66) est raccordé en communication fluidique, et dans laquelle le boîtier de filtrage (74) forme un espace pour impuretés (92), lequel jouxte un côté pour impuretés (94) du dispositif de filtrage (70) et lequel est en communication fluidique avec une embouchure d'aspiration (52) du dispositif d'aspiration (66), en particulier avec au moins une des caractéristiques suivantes :
- le levier pivotant (118 ; 202) est monté de manière à pouvoir tourner sur une paroi (116a) du boîtier de filtrage (74) ;
- au moins une partie de l'engrenage conique (158) est disposée et/ou est bloquée et/ou est montée sur une paroi (116 ; 104) du boîtier de filtrage (74) et/ou est reliée à celle-ci.

4. Machine de nettoyage du sol selon l'une quelconque des revendications précédentes, **caractérisée en ce que** le levier pivotant (118 ; 202) est relié de manière solidaire en rotation à un arbre (131), lequel est monté de manière à pouvoir tourner sur une paroi (116a),
et en particulier **caractérisée en ce qu'**un premier dispositif de couronne dentée (132) de l'engrenage conique (158) est relié de manière solidaire en rotation à l'arbre (131),
et en particulier **caractérisée en ce que** la paroi (116a) est disposée entre le levier pivotant (118 ; 202) et le premier dispositif de couronne dentée (132).

5. Machine de nettoyage du sol selon la revendication 4, **caractérisée par** au moins une des caractéristiques suivantes :
- une dent (140) du premier dispositif de couronne dentée (132) présente une direction d'espacement (146) entre une zone de pied (142) et une zone de tête (144), laquelle est au moins approximativement parallèle à un axe de rotation (120) de l'arbre (131) ;
- le premier dispositif de couronne dentée (132) est réalisé en tant bras oscillant et en particulier des dents (140) du premier dispositif de couronne dentée (132) sont tenues à distance par rapport à un axe de rotation (120) de l'arbre (131) et en particulier sont tenues à distance de l'arbre (131) ;
- une première butée (154) et/ou une deuxième butée (156) sont associées au premier dispositif de couronne dentée (132) pour limiter une possibilité de pivotement,
et en particulier la première butée (154) et/ou la deuxième butée (156) sont disposées sur la paroi (116a).

6. Machine de nettoyage du sol selon la revendication 4 ou 5, **caractérisée en ce qu'**une couronne dentée (138) du premier dispositif de couronne dentée (132) présente au moins un premier segment (148) avec des dents (140) et un deuxième segment (150) avec des dents (140), dans laquelle le premier segment (148) et le deuxième segment (150) sont reliés respectivement à une entretoise (134) et sont orientés de manière transversale par rapport à l'entretoise (134), et dans laquelle une fente (152) se situe entre le premier segment (148) et le deuxième segment (150),
et en particulier **caractérisée en ce que** le premier segment (148) et le deuxième segment (150) sont reliés d'un seul tenant à l'entretoise (134) et sont fabriqués par cintrage ou pliage.

7. Machine de nettoyage du sol selon l'une quelconque des revendications 4 à 6, **caractérisée en ce que** le premier dispositif de couronne dentée (132) est fabriqué au moins en partie par une opération de coupage.

8. Machine de nettoyage du sol selon l'une quelconque des revendications 4 à 7, **caractérisée en ce que** l'engrenage conique (158) comprend un deuxième dispositif de couronne dentée (160), lequel est couplé de manière à transmettre un couple de rotation au premier dispositif de couronne dentée (132), et en particulier avec au moins une des caractéristiques suivantes :
- le deuxième dispositif de couronne dentée (160) peut tourner autour d'un axe de rotation (164), lequel est orienté de manière transversale et en particulier de manière perpendiculaire par rapport à un axe de rotation (120) du premier dispositif de couronne dentée (132) ;
- le premier dispositif de couronne dentée (132) et le deuxième dispositif de couronne dentée (160) sont réalisés de manière adaptée l'un à l'autre avec du jeu de telle sorte que l'engrenage conique (158) peut fonctionner sans lubrification ;
- le deuxième dispositif de couronne dentée (160) est couplé au racloir (174).

9. Machine de nettoyage du sol selon l'une quelconque des revendications précédentes, **caractérisée en ce que** le dispositif de filtrage (70) comprend un filtre plissé plat, et que la racloir (174) présente une multitude d'éléments actifs (178) sur des plis (102) du dispositif de filtrage (70).

10. Machine de nettoyage du sol selon l'une quelconque des revendications précédentes, **caractérisée en ce que** le racloir (174) est guidé de manière à pouvoir coulisser.

11. Machine de nettoyage du sol selon l'une quelconque des revendications précédentes, **caractérisée en ce que** le racloir (174) présente au moins une tige (176), laquelle est pourvue d'évidements (190), sur lesquels des dents (172) du dispositif de couronne dentée (160) de l'engrenage conique (158) peuvent être mises en prise, dans laquelle une dent (172) du dispositif de couronne dentée (160) vient en prise avec au moins un évidement (190) de l'au moins une tige (176) dans une position définie du racloir (174),
et en particulier **caractérisée en ce que** l'au moins une tige (176) et le dispositif de couronne dentée (160) venant en prise sont réalisés de manière adaptée l'un à l'être avec du jeu de telle sorte qu'un fonctionnement sans lubrification est possible,
et en particulier **caractérisée en ce que** lorsqu'une dent (172) du dispositif de couronne dentée (160) vient en prise avec un évidement (190) de l'au moins une tige (176) sur au moins un emplacement, une distance (A) entre une dent (172) et une paroi de l'évidement (190) est d'au moins 0,5 mm.

12. Machine de nettoyage du sol selon l'une quelconque des revendications précédentes, **caractérisée en ce que** le racloir (174) est monté de manière à pouvoir coulisser sur un dispositif de maintien (184), lequel siège sur une paroi de logement (104) pour le dispositif de filtrage (70).

13. Machine de nettoyage du sol selon l'une quelconque des revendications précédentes, **caractérisée en ce qu'**un dispositif de couronne dentée (160) de l'engrenage conique (158) est monté de manière à pouvoir tourner sur un dispositif de maintien (184), lequel siège sur une paroi de logement (104) pour le dispositif de filtrage (70), et en particulier que le racloir (174) également est monté de manière mobile sur le dispositif de maintien (184).

14. Machine de nettoyage du sol selon l'une quelconque des revendications précédentes, **caractérisée par** une réalisation en tant que balayeuse.

15. Machine de nettoyage du sol selon l'une quelconque des revendications précédentes, **caractérisée par** une réalisation en tant que machine autoportée, dans laquelle le levier pivotant (118) est disposé de telle sorte qu'il peut être utilisé par un utilisateur qui est assis, ou
**caractérisée par** une réalisation en tant que machine de poursuite ou en tant que machine releveuse, dans laquelle le levier pivotant (202) est disposé de telle sorte qu'il peut être utilisé par un utilisateur (196) de la machine de nettoyage du sol dans sa position debout sur la machine de nettoyage du sol.
